Europäisches Patentamt

European Patent Office

Office européen des brevets

(11) Veröffentlichungsnummer: **0 134 430**
**B1**

(12) **EUROPÄISCHE PATENTSCHRIFT**

(45) Veröffentlichungstag der Patentschrifft:
07.02.90

(51) Int. Cl. $^5$: **B 60 T   8/32**

(21) Anmeldenummer: **84106740.8**

(22) Anmeldetag: **13.06.84**

(54) Antiblockierregelsystem.

(30) Priorität: **14.06.83 DE 3321376**
**29.10.83 DE 3339335**

(43) Veröffentlichungstag der Anmeldung:
**20.03.85 Patentblatt 85/12**

(45) Bekanntmachung des Hinweises auf die Patenterteilung:
**07.02.90 Patentblatt 90/06**

(84) Bennante Vertragsstaaten:
**DE FR GB SE**

(56) Entgegenhaltungen:
**DE-A-1 924 565**
**DE-A-2 212 711**
**DE-A-3 237 959**
**FR-A-2 288 655**

(73) Patentinhaber: **ROBERT BOSCH GMBH**
**Postfach 50**
**D-7000 Stuttgart 1 (DE)**

(72) Erfinder: **Leiber, Heinz, Ing. grad.**
**Theodor-Heuss-Strasse 34**
**D-7141 Oberriexingen (DE)**

(74) Vertreter: **Kammer, Arno, Dipl.-Ing.**
**ROBERT  BOSCH  GmbH  Zentralabteilung  Patente**
**Postfach 50**
**D-7000 Stuttgart 1 (DE)**

LIBERGRAF, STOCKHOLM 1990

## Beschreibung

Die Erfindung betrifft ein Antiblockierregelsystem mit den Merkmalen des Oberbegriffs des Anspruchs 1. Ein solches Antiblockierregelsystem ist aus DE-A-3 237 959 bekannt.

Die bekannte Verwendung eines Einspeiseventils bei Verwendung wenigstens eines statischen Bremskreises hat den Vorteil, daß auch, wenn keine Rückförderung von bei Bremsdruckabsenkung während der Antiblockierregelung ausgelassenem Druckmittel vorhanden ist, sich das Druckmittels in diesem Bremskreis nicht erschöpft.

Durch die erfindungsgemäße Ausgestaltung dieses Systems wird einmal eine Verbilligung dadurch erzielt, daß über das Einspeiseventil Druck nur gedrosselt aufgebaut wird. Damit sind gesonderte Bypassventile für den schnellen Druckaufbau ohne Regelung entbehrlich. Durch die weiteren Merkmale wird vermieden, daß sich die unterschiedlichen Drücke an den Radbremsen bei Regelung ausgleichen können. Zusätzlich wird eine Verbesserung der Wirkungsweise erzielt, die darin besteht, daß bei ABS-Funktion eine kleinere Druckaufbaugeschwindigkeit wirksam ist, welche geringere Anforderungen an die Magnetventile und eine Reduzierung der Druckschwingungen als Folge des Ventiltaktens bewirkt. Die Verwendung des Vordrucks als Druckquelle vermeidet sehr unterschiedliche Drücke an den Bremsdrucksteuerventilen im Normalbremsfall und ab Beginn der Regelung.

Anhand der Zeichnung werden Ausführungsbeispiele der Erfindung erläutert. Es zeigen:

Fig. 1 einen schematischen Aufbau der Hydraulik des Antiblockierregelsystems

Fig. 2 eine mögliche Verschaltung der Ventile eines Bremskreises zur Erzielung der gewünschten Funktion

Fig. 3 eine andere Ausbildung der Ventilanordnung.

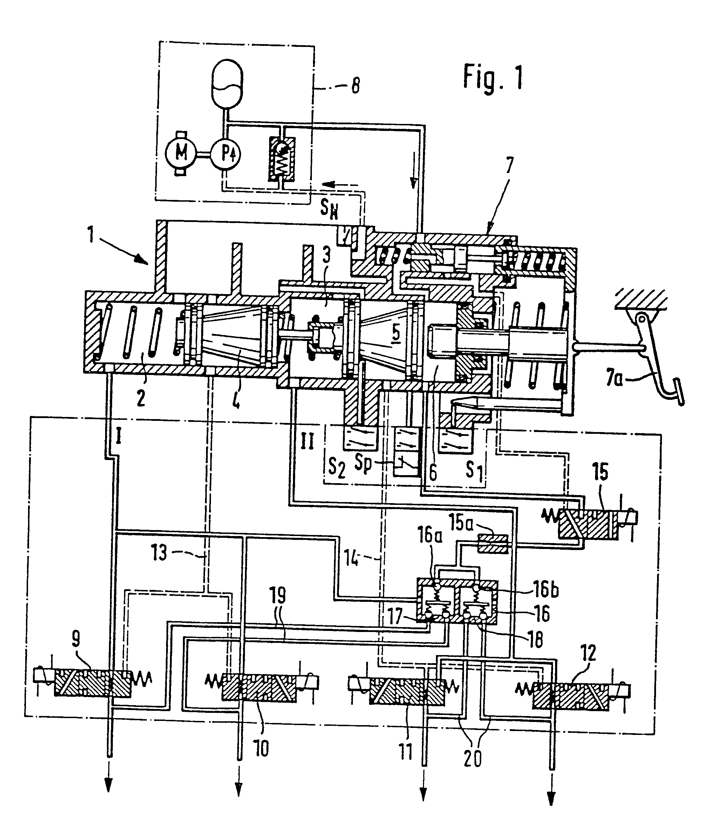

In Fig. 1 ist mit 1 ein Bremskraftverstärker bezeichnet, der zwei Hauptbremszylinder 2 und 3 mit zugehörigen Kolben 4 und 5 für zwei Bremskreise I und II aufweist. An den Kolben 5 schließt sich eine Druckkammer 6 an, in der mittels eines von einem Pedal 7a betätigten Bremsventils 7 ein von einer Druckversorgung 8 abgeleiteter Druck - der Vordruck - eingesteuert wird. Dieser wirkt auf die Kolben 5 (direkt) und 4 (indirekt) ein und erzeugt damit den Bremsdruck in den Bremskreisen I und II.

In den Leitungen zu den nicht gezeigten Radbremszylindern sind pro Bremskreis je zwei 3/3 Magnetventile 9 - 12 eingeschaltet, die wie beim Ventil 12 ersichtlich in einer Stellung den Druck an den Radbremsen ansteigen lassen, diesen in einer zweiten Stellung konstanthalten und diesen in einer dritten Stellung über Rücklaufleitungen 13 und 14 erniedrigen.

An die Druckkamer 6 ist ein Einspeiseventil in Form eines 3/2-Magnetventils 15 angeschaltet, über das während der Antiblockierregelung der Druck in der Druckkammer 6 allerdings über eine Drossel 15a an die Eingänge der Bremsdrucksteuerventile 9 - 12 gelegt wird. Dies geschieht über einen zweigeteilten Ventilblock 16, der zwei Rückschlagventile 16a und b enthält, die nur einen Zufluß von Druckmittel zu den Ventilen 9 - 12 hin zulassen und durch die eine Verkopplung der beiden Bremskreise I und II vermieden wird. Der Ventilblock 16 enthält noch vier Rückschlagventile 17 und 18, die in Nebenschlußleitungen 19 und 20 zu den Ventilen 9 - 12 liegen und bei Absinken des Drucks in den Kammern des Ventilblocks 16 einen Druckabbau am Ausgang der Ventile 9 - 12 ermöglichen.

Bei normalem Bremsen wird der Bremsdruck nur über die Hauptbremszylinder 2 und 3 erzeugt. Er kann schnell aufgebaut werden. Bei Antilockierregelung ist zusätzlich das Einspeiseventil 15 durchlässig und liefert Bremsmittel, gedrosselt nach.

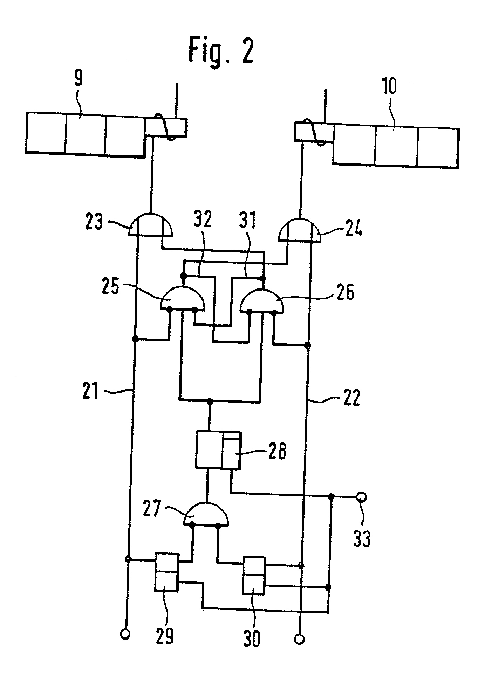

Fig. 2 zeigt eine mögliche Verschaltung der Ventile eines Bremskreises, z. B. der Ventile 9 und 10 der Fig. 1. Die Ventile 9 und 10 sind Dreistellungsventile und werden von der Auswerteschaltung her über die Leitungen 21 und 22 und die Oder-Gatter 23 und 24 angesteuert. Ohne Ansteuerung lassen sie Druckaufbau zu, in der mit Hilfe eines entsprechend bemessenen Ansteuersignals eingesteuerten Zwischenstellung halten sie Druck konstant und in der mit Hilfe eines größeren Signals eingesteuerten dritten Stellung bauen sie Druck ab. Um gleichzeitig Druckaufbau über beide Ventile 9 und 10 zu verhindern sind Und-Gatter 25, 26 und 27 sowie bistabile Glieder 28 - 30 vorgesehen.

Wird der Druck an beiden Rädern geregelt und werden somit durch Druckabbausignale auf den Leitungen 21 und 22 die bistabilen Kippstufen 29 und 30 gekippt und werden damit Eingangssignale dem Und-Gatter 27 zugeführt, dann wird das bistabile Glied 28 gesetzt, das ein Signal an die Und-Gatter 25 und 26 gibt. Solange auf beiden Leitungen 21 und 22 Ansteuersignale vorhanden sind (zum Druckabbau oder zur Konstanthaltung), sind die Und-Gatter 25 und 26 wegen der Inversion der Signale gesperrt. Beide Ausgänge der Und-Gatter 25 und 26 wiesen dann kein Signal auf. An den invertierten Eingängen der Und-Gatter 25 und 26 für die gekreuten Rückkoppelleitungen 31 und 32 liegt dann Signal.

Wenn dann eines der Signale auf den Leitungen 21 oder 22 z. B. das Signal auf der Leitung 21 verschwindet (und damit Druck über Ventil 9 augebaut wird) dann erscheint ein Ausgangssignal am Und-Gatter 25, das ein solches Signal an das Ventil 10 liefert, daß durch dieses Signal allein eine Druckkonstanthaltung (mittlere Stellung des Ventils 10) bewirkt werden würde. Solange jedoch ein Signal auf der Leitung 22 vorhanden ist, wird dieses Signal überdeckt. Gleichzeitig sperrt das Ausgangssignal des Und-Gatters 25 das Und-Gatter 26 über die Rückkopplungsleitung 32. Verschwindet nun auch das Ansteuersignal auf Leitung 22, dann wird das Ventil 10 über das Ausgangssignal des Und-Gatters 25 in der Mittelstellung (Druckkonstanthaltung) gehalten. Andererseits wird wegen der Sperrung des Und-Gatters 26 kein Signal zum Ventil 9 gegeben. Es wird somit ein Druckaufbau über das Ventil 10 solange verhindert, als Druckaufbau über Ventil 9 erfolgt. Kommt wieder ein Steuersignal auf Leitung 21, dann wird das Und-Gatter 25 gesperrt und damit das Konstanthaltesignal für das Ventil 10 beendet. Gleichzeitig wird nun die Sperre des Und-Gatters 26 über die Leitung 32 aufgehoben und - weiterhin kein Signal auf Leitung 22 unterstellt - über das Ventil 10 Druck aufgebaut und nun ein Konstanthaltesignal für das Ventil 9 vom Und-Gatter 26 erzeugt. Gleichzeitig ist nun das Und-Gatter 25 gesperrt. Die Rücksetzung der bistabilen Glieder 28 - 30 erfolgt am Bremsende über Klemme 33, beispielsweise durch das Lösen des Bremslichtschalter.

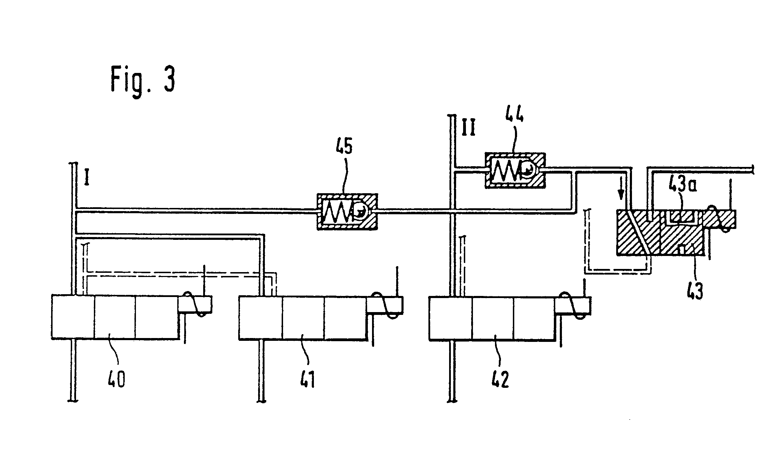

Fig. 3 zeigt eine vereinfachte Ausbildung einer möglichen Ventilanordnung. Es sind hier nur drei Bremsdrucksteuerventile 40 - 42 und das Druckeinspeiseventil 43 gezeigt, das die Drossel 43a enthält. Der Ausgang des Einspeiseventils 43 ist hier über die getrennt vorgesehenen Rückschlagventile 44 und 45 mit den Bremsdrucksteuerventilen 42 bzw. 40 und 41 verbunden.

## Patentansprüche

1. Antiblockierregelsystem enthaltend Meßwertgeber, eine Auswerteschaltung und in die Bremsleitungen zwischen wenigstens einem Hauptbremszylinder und wenigstens zwei Radbremszylindern eingeschaltete Bremsdrucksteuerventile zur Variation des Bremsdrucks, und ein Einspeiseventil, das bei Antiblockierregelbetrieb betätigt wird und dann den Druck einer Druckquelle an die Eingänge der Bremsdrucksteuerventile anlegt dadurch gekennzeichnet, daß die Druckquelle der mittels eines vom Fahrer (Pedal 7 a) betätigten Bremsventils (7) eingesteuerte Druck (Vordruck) (Druckkammer 6) ist, daß die Einspeisung gedrosselt erfolgt (Drossel 15 a) und, daß die Auswerteschaltung (Fig. 2) derart ausgelegt ist, daß die Bremsdrucksteuerventile (9, 10; 11, 12) in wenigstens einem Bremskreis (I oder II) während der Antiblockierregelung nicht gleichzeitig in die Stellung Druckaufbau steuerbar sind.

2. Antiblockierregelsystem nach Anspruch 1, dadurch gekennzeichnet, daß bei Anschaltung der Druckquelle (Druckraum 6) an die Bremsdrucksteuerventile (9 - 12) mehrerer Bremskreise (I und II) mittels nur eines Einspeiseventils (15) zwischen diesem Einspeiseventil (15) und den Bremskreisen (I und II) nur einen Druckaufbau in den Bremskreisen (I und II) zulassende Einrichtungsventile (16 a und b) eingeschaltet sind.

3. Antiblockierregelsystem nach Anspruch 1 oder 2, dadurch gekennzeichnet, daß die Bremsdrucksteuerventile (9 - 12) durch einen Druckabbau an deren Ausgang zulassende Einrichtungsventile (17, 18) überbrückt sind.

## Claims

1. Anti-skid system comprising a measurement transducer, an evaluation circuit and brake pressure control valves, inserted into the brake lines between at least one master brake cylinder and at least two wheel brake cylinders, for varying the brake pressure, and a feed valve which is operated on operation of the anti-skid system and thereupon applies the pressure of a pressure source to the inputs of the brake pressure control valves, characterized in that the pressure source is a pressure (inlet pressure) (pressure chamber 6) established by means of a brake valve (7) operated by the drier (pedal 7a), that feeding is throttled (throttle 15a), and that the evaluation circuit (Figure 2) is so designed that the brake pressure control valves (9, 10; 11, 12) in at least one brake circuit (I or II) cannot be simultaneously set to the pressure build-up position during an anti-skid control adjustment.

2. Anti-skid system according to Claim 1, characterized in that when the pressure source (pressure chamber 6) is connected to the brake pressure control valves (9 - 12) of a plurality of brake circuits (I and II) by means of only one feed valve (15), one-way valves (16a and 16b) allowing only pressure build-up in the brake circuits (I and II) are inserted between said feed valve (15) and the brake circuits (I and II).

3. Anti-skid system according to Claim 1 or 2, characterized in that the brake pressure control valves (9 - 12) are bypassed by one-way valves (17, 18) allowing pressure reduction at their outlet.

## Revendications

1. Système de régulation anti-blocage contenant un capteur de valeur de mesure, un circuit d'exploitation et des soupapes de commande de pression de freinage pour la variation de la pression de freinage branchées dans les conduites de freinage, entre au moins une maître-cylindre de freinage et au moins deux cylindres de freins de roue, et une soupape d'injection, actionnée lors du fonctionnement de la régulation anti-blocage, la pression d'une source de pression étant alors appliquée aux entrées des soupapes de commande de pression de freinage, caractérisé en ce que la source de pression est la pression (pression préliminaire) (chambre de pression 6) commandée au moyen d'une soupape de freinage (7) actionnée par le conducteur (pédale 7a), en ce que l'injection est étranglée (étranglement 15a) et en ce que le circuit d'exploitation (figure 2) est réalisé de façon que les soupapes de commande de pression de freinage (9, 10; 11, 12) situées dans au moins un circuit de freinage (I ou II) ne

puissent pas être commandées simultanément en position d'établissement de pression pendant une régulation d'anti-blocage.

2. Système de régulation anti-blocage selon la revendication 1, caractérisé en ce que lors du branchement de la source de pression (espace sous pression 6) sur les soupapes de commande de pression de freinage (9 à 12) de plusieurs circuits de freinage (I et II), au moyen d'une seule soupape d'injection (15), des soupapes de dispositif (16a et b) admettant uniquement un établissement de pression dans les circuits de freinage (I et II) sont branchées entre cette soupape d'injection (15) et les circuits de freinage (I et II).

3. Système de régulation anti-blocage selon la revendication 1 ou 2, caractérisé en ce que les soupapes de commande de pression (9 à 12) sont pontées au moyen de soupapes de dispositif (17, 18) admettant une suppression de pression à leur sortie.

Fig. 1

# Fig. 2

# Fig. 3